(19) Europäisches Patentamt
European Patent Office
Office européen des brevets

(11) EP 4 742 364 A1

(12) EUROPEAN PATENT APPLICATION
published in accordance with Art. 153(4) EPC

(43) Date of publication:
**13.05.2026 Bulletin 2026/20**

(21) Application number: **25833497.8**

(22) Date of filing: **01.07.2025**

(51) International Patent Classification (IPC):
***H01M 10/54*** (2006.01) ***C22B 26/12*** (2006.01)
***C22B 3/42*** (2006.01) ***B09B 3/40*** (2022.01)
***B09B 3/35*** (2022.01) ***B09B 101/16*** (2022.01)

(52) Cooperative Patent Classification (CPC):
**C22B 3/16; B09B 3/35; B09B 3/40; C22B 1/005; C22B 1/02; C22B 3/326; C22B 3/3842; C22B 3/3844; C22B 3/3846; C22B 7/007; C22B 26/12; H01M 10/54;** B09B 2101/16

(86) International application number:
**PCT/KR2025/009306**

(87) International publication number:
**WO 2026/010311 (08.01.2026 Gazette 2026/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.07.2024 KR 20240088106**

(71) Applicant: **LG Energy Solution, Ltd.**
**Seoul 07335 (KR)**

(72) Inventors:
- **LEE, Dongseok**
  **Daejeon 34122 (KR)**
- **KWON, Ohsung**
  **Daejeon 34122 (KR)**
- **YU, Hyemin**
  **Daejeon 34122 (KR)**
- **KIM, Donghyeon**
  **Daejeon 34122 (KR)**
- **NOH, Taechong**
  **Daejeon 34122 (KR)**
- **LEE, Jeongbae**
  **Daejeon 34122 (KR)**

(74) Representative: **Hoffmann Eitle**
**Patent- und Rechtsanwälte PartmbB**
**Arabellastraße 30**
**81925 München (DE)**

# (54) METHOD FOR RECOVERING LITHIUM COMPOUND FROM CATHODE MATERIAL OF LITHIUM-ION BATTERY

(57) The present invention relates to a method of recovering a lithium compound. According to the present invention, the method of the present invention includes step (a) of extracting a reduced roasted product of a lithium-ion battery cathode material using an organic solvent containing a cation exchange extractant to obtain a lithium-extracted organic solvent and extraction residues; step (b) of separating the lithium-extracted organic solvent and the extraction residues; step (c) of stripping the separated lithium-extracted organic solvent using an acidic solution to obtain a lithium-containing aqueous solution and an organic solvent; step (d) of separating the lithium-containing aqueous solution and the organic solvent; and step (e) of carbonating lithium in the separated lithium-containing aqueous solution to obtain lithium carbonate.

According to the present invention, the present invention relates to a method of recovering a lithium compound from a lithium-ion battery cathode material. According to the method of the present invention, by directly extracting lithium from a reduced roasted product of a lithium-ion battery cathode material using an organic solvent containing a cation exchange extractant, and subsequently performing stripping using an acidic solution, the lithium recovery rate may be increased, the energy, time, and cost required for recovering lithium may be reduced. Accordingly, economic feasibility and efficiency may be improved.

EP 4 742 364 A1

[FIG. 2]

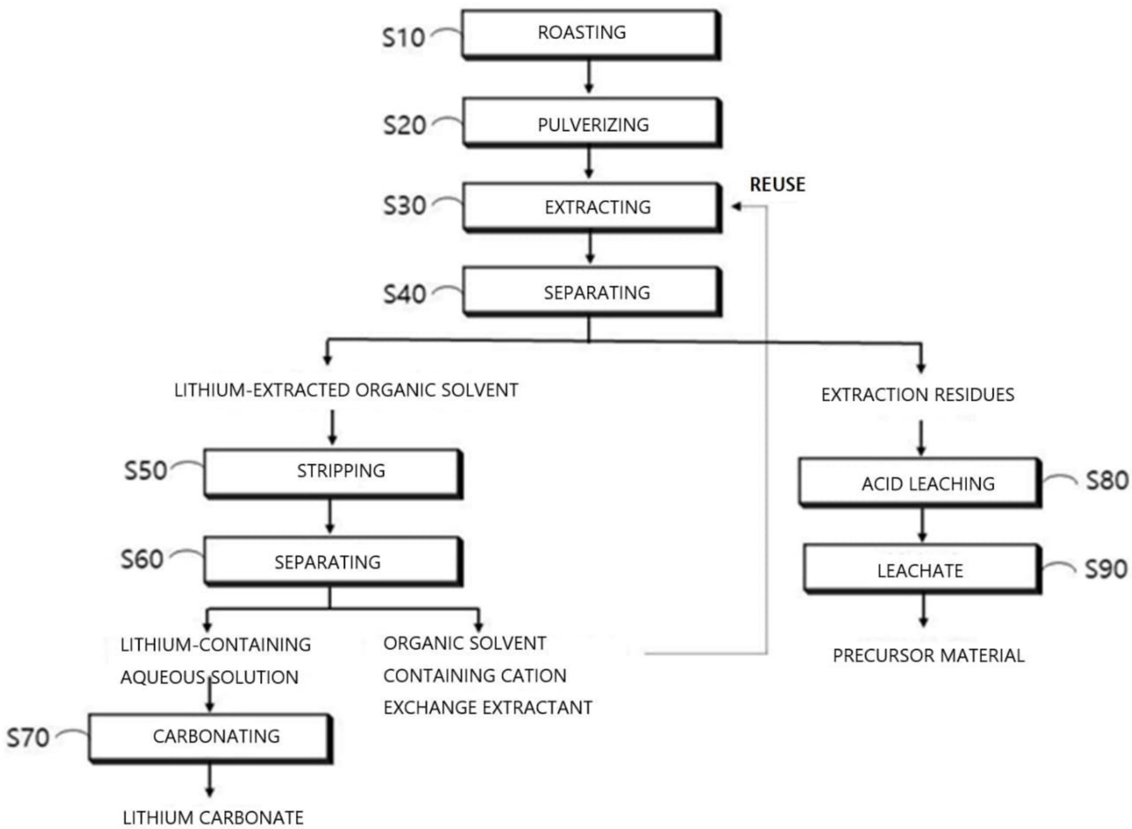
S10
ROASTING
S20
PULVERIZING
S30
EXTRACTING
REUSE
S40
SEPARATING
LITHIUM-EXTRACTED ORGANIC SOLVENT
EXTRACTION RESIDUES
S50
STRIPPING
S60
SEPARATING
LITHIUM-CONTAINING AQUEOUS SOLUTION
ORGANIC SOLVENT CONTAINING CATION EXCHANGE EXTRACTANT
S70
CARBONATING
LITHIUM CARBONATE
ACID LEACHING
S80
LEACHATE
S90
PRECURSOR MATERIAL

## Description

[Technical Field]

[Cross-Reference to Related Application]

This application claims priority to Korean Patent Application No. 10-2024-0088106, filed on July 4, 2024, in the Korean Intellectual Property Office, the disclosure of which is incorporated herein by reference.

The present invention relates to a method of recovering a lithium compound from a lithium-ion battery cathode material. More particularly, according to the method of the present invention, by directly extracting lithium from a reduced roasted product of a lithium-ion battery cathode material using an organic solvent containing a cation exchange extractant, and subsequently performing stripping using an acidic solution, the lithium recovery rate may be increased, and the energy, time, and cost required for concentration to recover lithium may be reduced. Accordingly, economic feasibility and efficiency may be improved.

[Background Art]

Demand for lithium-ion batteries has been steadily increasing along with the portable electronic device market since the 1990s, and has recently been increasing further worldwide due to the rapid expansion of the electric vehicle market. This trend could lead to instability in the supply and demand of lithium resources in the near future, and the continuous accumulation of waste batteries could cause major environmental problems. To solve these problems, recycling of used lithium-ion batteries is a very important technological challenge.

A lithium-ion battery is largely composed of a cathode formed by coating a metal foil such as aluminum with a cathode active material layer, an anode formed by coating a metal foil such as copper with an anode active material layer, a separator that prevents the cathode and anode from mixing, and an electrolyte solution that allows lithium ions to move between the cathode and anode.

A cathode accounts for more than 60 % of the cost of a lithium-ion battery. Lithium cobalt oxide ($LiCoO_2$) is used as the cathode because the lithium cobalt oxide has excellent reversibility, low self-discharge rate, high capacity, and high energy density, and is easy to synthesize. In addition, to reduce the use of expensive cobalt, lithium complex oxides containing Ni, Mn, and the like, such as lithium nickel cobalt manganese oxide ($Li(Ni, Co, Mn)O_2$), lithium manganese oxide ($LiMnO_2$), and lithium iron phosphate ($LiFePO_4$), are used. Since the cathode material contains about 5 to 7 % lithium, a method of recovering lithium compounds from cathode materials of waste lithium-ion batteries is receiving significant attention.

A conventional method for recovering lithium compounds from waste lithium-ion battery cathode material involves converting lithium from waste lithium-ion battery cathode material into lithium carbonate through reduction heat treatment using carbon, followed by water leaching. Although this process allows selective recovery of lithium, it has problems of low lithium recovery rates and significant consumption of energy, cost, and time during processes such as evaporation concentration, vacuum concentration, or electrochemical concentration to concentrate the lithium carbonate.

Therefore, there is a need to develop a method for recovering lithium compounds from waste lithium-ion battery cathode material, which improves the recovery rate of lithium compounds and reduces the energy, cost, and time required for lithium concentration.

[Related Art Documents]

[Patent Documents]

KR 2015-0094412 A

[Disclosure]

[Technical Problem]

Therefore, the present invention has been made in view of the above problems, and it is one object of the present invention to provide a method of recovering a lithium compound from a lithium-ion battery cathode material. According to the method of the present invention, by directly extracting lithium from a reduced roasted product of a lithium-ion battery cathode material using an organic solvent containing a cation exchange extractant, and subsequently performing stripping using an acidic solution, the lithium recovery rate may be increased, and the energy, time, and cost required for lithium concentration may be reduced. Accordingly, economic feasibility and efficiency may be improved.

It is another object of the present invention to provide a high-purity lithium compound.

The above and other objects can be accomplished by the present invention described below.

[Technical Solution]

I) In accordance with one aspect of the present invention, provided is a method of recovering a lithium compound, the method including (a) extracting a reduced roasted product of a lithium-ion battery cathode material using an organic solvent containing a cation exchange extractant to obtain a lithium-extracted organic solvent and extraction residues; (b) separating the lithium-extracted organic solvent and the extraction residues; (c) stripping the separated lithium-extracted organic solvent using an acidic solution to obtain a lithium-containing aqueous solution and an organic solvent; (d) separating the lithium-containing aqueous solution and the organic solvent; and (e) carbonating lithium in the separated lithium-containing aqueous solution to obtain lithium carbonate.

II) According to I), the reduced roasted product of the cathode material may be obtained preferably by mixing the lithium-ion battery cathode material with a carbon-containing reducing agent, roasting the mixture at 550 to 750 °C, and then pulverizing the roasted mixture.

III) According to I) or II), the carbon-containing reducing agent may be used preferably in an amount of 0 to 3 mol per 1 mol of a cathode active material in the lithium-ion battery cathode material.

IV) According to I) to III), the carbon-containing reducing agent may be preferably an organic substance containing carbon, an inorganic substance containing carbon, an anode material, or a mixture thereof.

V) According to I) to IV), the roasting may be performed preferably under a reducing gas or an inert gas.

VI) According to I) to V), the lithium-ion battery cathode material may preferably include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co).

VII) According to I) to VI), the lithium-ion battery cathode material may be preferably a waste lithium-ion battery cathode material.

VIII) According to I) to VII), the pulverizing may be performed preferably using a milling machine.

IX) According to I) to VIII), in step (a), the cation exchange extractant may preferably include an alkyl phosphate-based extractant, alkyl monocarboxylic acid, or a mixture thereof.

X) According to I) to IX), the alkyl phosphate-based extractant may preferably include one or more selected from the group consisting of di-(2-ethylhexyl) phosphate, 2-ethylhexyl hydrogen-2-ethylhexylphosphonate, and bis(2,4,4-trimethylpentyl)phosphinic acid.

XI) According to I) to X), the alkyl monocarboxylic acid may preferably include a compound represented by Chemical Formula 1 below.

[Chemical Formula 1]

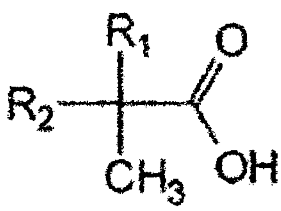

,

wherein $R_1$ and $R_2$ are each independently an alkyl group, and the total number of carbon atoms in $R_1$ and $R_2$ is from 5 to 9.

XII) According to I) to XI), in step (a), the organic solvent may preferably include one or more selected from the group consisting of kerosene, hexane, benzene, and toluene.

XIII) According to I) to XII), in step (a), the cation exchange extractant may be included in an amount of preferably 0.9 to 2.5 mol per 1 mol of lithium in the reduced roasted product of the lithium-ion battery cathode material.

XIV) According to I) to XIII), in step (a), a solid-to-liquid ratio of the reduced roasted product of the lithium-ion battery cathode material to the organic solvent containing a cation exchange extractant may be preferably 1 g/8 ml to 1 g/44

ml.

XV) According to I) to XIV), in step (b), separation of the lithium-extracted organic solvent and the extraction residues may be performed using preferably vacuum filtration.

XVI) According to I) to XV), in step (c), an organic/aqueous volume ratio of the lithium-extracted organic solvent to the acidic solution may be preferably 0.5 to 10.

XVII) According to I) to XVI), in step (c), the acidic solution may be preferably a sulfuric acid aqueous solution, a hydrochloric acid aqueous solution, or a nitric acid aqueous solution.

XVIII) According to I) to XVII), in step (e), the carbonation may be performed preferably by adding carbonate or carbon dioxide gas.

XIX) According to I) to XVIII), in step (d), the separated organic solvent may be preferably reused in the extraction of step (a).

XX) According to I) to XIX), the method of recovering a lithium compound from a lithium-ion battery cathode material may further include leaching the extraction residues obtained in step (b) with an acid to obtain a leachate containing dissolved residual metal compounds.

[Advantageous Effects]

According to the present invention, by directly extracting lithium from a reduced roasted product of a lithium-ion battery cathode material using an organic solvent containing a cation exchange extractant, and subsequently performing stripping using an acidic solution, the lithium recovery rate can be significantly increased, the loss of organic metals can be reduced, the energy, time, and cost required for concentration to recover lithium can be reduced. Accordingly, economic feasibility and efficiency can be improved.

In addition, wastewater generation and production costs can be reduced by reusing an organic solvent containing a cation exchange extractant, which has been separated after stripping, in the extraction process.

[Description of Drawings]

The drawings attached to this specification illustrate embodiments of the present invention and, together with the detailed description given below, serve to further understand the technical idea of the present invention. Therefore, the present invention should not be construed as being limited to the matters described in these drawings.

FIG. 1 shows kerosene containing a cation exchange extractant (di-(2-ethylhexyl) phosphate) before and after lithium extraction according to Example 1 of the present invention, wherein the left side indicates before extraction and the right side indicates after extraction.

FIG. 2 is a process diagram illustrating a method of recovering a lithium compound from a lithium-ion battery cathode material according to one embodiment of the present invention.

FIG. 3 is a graph showing extraction rates of Li, Ni, Co, Mn, and Al in Examples 1 to 4 according to the present invention.

FIG. 4 is a graph showing extraction rates of Li, Ni, Co, Mn, and Al in Examples 2, 5, and 6 according to the present invention.

FIG. 5 is a graph showing extraction rates of Li, Ni, Co, Mn, and Al in Examples 7 to 9 according to the present invention.

FIG. 6 shows lithium carbonate recovered from Example 8 according to the present invention.

[Best Mode]

While studying a method of recovering a lithium compound from a lithium-ion battery cathode material, the present inventors found that when lithium was directly extracted from a reduced roasted product of a lithium-ion battery cathode material using an organic solvent containing a cation exchange extractant and then stripping was performed using an acidic solution, the lithium recovery rate was high, and energy, cost, and time required for concentrating lithium were reduced, while lithium was easily concentrated. Based on these results, the present inventors conducted further studies to complete the present invention.

**<u>Method of recovering a lithium compound from a lithium-ion battery cathode material</u>**

A method of recovering a lithium compound from a lithium-ion battery cathode material according to the present invention includes step (a) of extracting a reduced roasted product of a lithium-ion battery cathode material using an organic solvent containing a cation exchange extractant to obtain a lithium-extracted organic solvent and extraction

residues; step (b) of separating the lithium-extracted organic solvent and the extraction residues; step (c) of stripping the separated lithium-extracted organic solvent using an acidic solution to obtain a lithium-containing aqueous solution and an organic solvent; step (d) of separating the lithium-containing aqueous solution and the organic solvent; and step (e) of carbonating lithium in the separated lithium-containing aqueous solution to obtain lithium carbonate. In this case, the lithium recovery rate may be increased, and the energy, time, and cost required for concentration to recover lithium may be reduced. Thus, economic feasibility and efficiency may be excellent.

Hereinafter, each step of the method of recovering a lithium compound from a lithium-ion battery cathode material according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

(a) Extracting a reduced roasted product of a lithium-ion battery cathode material using an organic solvent containing a cation exchange extractant to obtain a lithium-extracted organic solvent and extraction residues

The method of recovering a lithium compound from a lithium-ion battery cathode material according to the present invention may include step (a) of extracting a reduced roasted product of a lithium-ion battery cathode material using an organic solvent containing a cation exchange extractant to obtain a lithium-extracted organic solvent and extraction residues. In this case, by directly extracting lithium from the reduced roasted product of the lithium-ion battery cathode material, the lithium recovery rate may be significantly improved, and impurities such as Ni, Co, and Mn in the organic solvent may be reduced. In addition, extraction residues may contain large amounts of Ni, Co, and Mn, thus a precursor material may be easily prepared, providing economic advantages.

The cathode material herein means a material including a cathode active material or is a cathode active material.

For example, in step (a), the cation exchange extractant may include an alkyl phosphate-based extractant, alkyl monocarboxylic acid, or a mixture thereof. In this case, by directly extracting lithium from the reduced roasted product of the lithium-ion battery cathode material, the lithium recovery rate may be significantly improved.

For example, the alkyl phosphate-based extractant may include one or more selected from the group consisting of di-(2-ethylhexyl) phosphate, 2-ethylhexyl hydrogen-2-ethylhexylphosphonate, and bis(2,4,4-trimethylpentyl)phosphinic acid, preferably di-(2-ethylhexyl) phosphate. In this case, by directly extracting lithium from the reduced roasted product of the lithium-ion battery cathode material, the lithium recovery rate may be significantly improved.

For example, the alkyl monocarboxylic acid may include a compound represented by Chemical Formula 1 below. In this case, by directly extracting lithium from the reduced roasted product of the lithium-ion battery cathode material, the lithium recovery rate may be significantly improved.

[Chemical Formula 1]

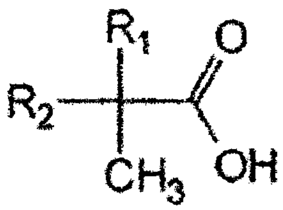

In Chemical Formula 1, $R_1$ and $R_2$ are each independently an alkyl group, and the total number of carbon atoms in $R_1$ and $R_2$ is 5 to 9, preferably 6 to 8, more preferably 7.

For example, the cation exchange extractant may exist in a monomeric, dimeric, or polymeric form, and when in a monomeric form, the cation exchange extractant may react with lithium as shown in Reaction Scheme 1 below, and when in a dimeric form, the cation exchange extractant may react with lithium as shown in Reaction Scheme 2 below.

[Reaction Scheme 1] $Li^+_{(aq)} + HA_{(org)} = LiA_{(orq)} + H^+_{(aq)}$

[Reaction Scheme 2] $Li^+_{(aq)} + (HA)_{2(org)} = Li(A \cdot HA)n_{(orq)} + H^+_{(aq)}$

In Reaction Schemes 1 and 2, A is a cation exchange extractant.

In step (a), the organic solvent is used to dilute the cation exchange extractant, and may include, for example, one or more selected from the group consisting of kerosene, hexane, benzene, and toluene, preferably kerosene. In this case, the viscosity of the cation exchange extractant may be reduced, thereby facilitating interaction with the reduced roasted product of the lithium-ion battery cathode material, and reducing the amount of cation exchange extractant used, thus providing economic advantages.

As the kerosene, a product obtained by heating crude oil, collecting gases vaporized at 180 to 250 °C, and then liquefying therefrom may be used.

As the hexane, a product obtained by heating crude oil, collecting gases vaporized at 65 to 70 °C, and then liquefying therefrom may be used.

As the benzene, an aromatic compound produced by subjecting toluene to a hydrodealkylation process at 500 to 650 °C may be used.

As the toluene, an aromatic compound obtained by separating and purifying by-products generated during gasoline production from crude oil may be used.

For example, in step (a), the organic solvent may contain the cation exchange extractant at a concentration of 0.7 to 1.3 mol/L, preferably 0.8 to 1.2 mol/L, and more preferably 0.9 to 1.1 mol/L. Within this range, lithium in the reduced roasted product of the lithium-ion battery cathode material may be easily leached.

For example, in step (a), based on 1 mol of lithium in the reduced roasted product of the lithium-ion battery cathode material, the cation exchange extractant may be included in an amount of 0.9 to 2.5 mol, preferably 1.0 to 2.4 mol, more preferably 1.2 to 2.3 mol, still more preferably 1.3 to 2.2 mol, still more preferably 1.4 to 2.1 mol. Within this range, lithium in the reduced roasted product of the lithium-ion battery cathode material may sufficiently bind to the cation exchange extractant, thus easily extracted into the organic solvent.

For example, in step (a), the solid-to-liquid ratio of the reduced roasted product of the lithium-ion battery cathode material to the organic solvent containing a cation exchange extractant may be 1 g/8 ml to 1 g/44 ml, preferably 1 g/15 ml to 1 g/42 ml, more preferably 1 g/18 ml to 1 g/42 ml, still more preferably 1 g/18 ml to 1 g/35 ml, still more preferably 1 g/18 ml to 1 g/25 ml. Within this range, lithium in the reduced roasted product of the lithium-ion battery cathode material may sufficiently bind to the cation exchange extractant, thus easily extracted into the organic solvent.

In the present disclosure, the solid-to-liquid ratio refers to the volume of liquid relative to the weight of solid. That is, the solid-to-liquid ratio refers to the volume (ml) of the organic solvent containing a cation exchange extractant relative to the content (g) of the reduced roasted product of the lithium-ion battery cathode material.

In the extraction of step (a), lithium in the reduced roasted product of the lithium-ion battery cathode material binds to the cation exchange extractant to form a complex, thereby extracted into the organic solvent.

For example, in step (a), the extraction may be performed by adding the reduced roasted product of the lithium-ion battery cathode material to the organic solvent containing a cation exchange extractant, followed by stirring at room temperature using a stirrer. In this case, lithium in the reduced roasted product of the lithium-ion battery cathode material may be easily extracted into the organic solvent, and the extraction time may be reduced.

In the present disclosure, room temperature may be a point within the range of 20 ± 5 °C.

For example, the stirring may be performed at a speed of 100 to 500 rpm, preferably 200 to 400 rpm, more preferably 250 to 350 rpm. Within this range, lithium in the reduced roasted product of the lithium-ion battery cathode material may be easily extracted.

For example, the stirring may be performed for 0.5 hours or more, preferably 0.5 to 2 hours, more preferably 0.5 to 1.5 hours, still more preferably 0.7 to 1.2 hours. Within this range, lithium in the reduced roasted product of the lithium-ion battery cathode material may be sufficiently extracted, allowing the lithium compound to be recovered in high yield.

For example, in step (a), the reduced roasted product of the lithium-ion battery cathode material may be obtained by roasting the lithium-ion battery cathode material, or a mixture of the lithium-ion battery cathode material and the carbon-containing reducing agent at 550 to 750 °C, followed by pulverizing. In this case, lithium may be easily extracted into the organic solvent containing a cation exchange extractant, thereby improving the lithium recovery rate.

For example, the roasting may involve heat-treating the lithium-ion battery cathode material or a mixture of the lithium-ion battery cathode material and the carbon-containing reducing agent at 550 to 750 °C to obtain the reduced roasted product of the lithium-ion battery cathode material. In this case, a high-purity lithium compound may be recovered at a high yield by removing a binder added during preparation of a cathode material and reducing metallic substances bonded with oxygen.

As a specific example, the reduced roasted product of the lithium-ion battery cathode material may be obtained by pulverizing the lithium-ion battery cathode to separate a current collector, and then heat-treating the obtained powder-type lithium-ion battery cathode material at 550 to 750 °C. In this case, the conductive material and binder in the lithium-ion battery cathode material may serve as reducing agents, and the binder added during the preparation of a cathode material may be removed through roasting, while metallic substances bonded with oxygen may be reduced, thereby allowing a high-purity lithium compound to be recovered at a high yield.

As another example, the reduced roasted product of the lithium-ion battery cathode material may be obtained by pulverizing the lithium-ion battery cathode to separate a current collector, mixing the obtained powder-type lithium-ion battery cathode material with a carbon-containing reducing agent, and then heat-treating the mixture at 550 to 750 °C. In this case, the binder added during the preparation of the cathode material may be removed through roasting, and metallic substances bonded with oxygen may be reduced, thereby allowing a high-purity lithium compound to be recovered at a high yield.

The lithium-ion battery cathode material and the carbon-containing reducing agent may preferably be dry-mixed. In this case, the reduction effect of carbon may be maximized.

For example, based on 1 mol of the cathode active material in the lithium-ion battery cathode material, the carbon-containing reducing agent may be used in an amount of 0 to 3 mol, or greater than 0 mol and 3 mol or less, preferably 0.3 to 3 mol, more preferably 0.3 to 2 mol, still more preferably 0.7 to 1.5 mol, still more preferably 0.9 to 1.2 mol. Within this range, there is an effect of increased heat treatment efficiency and shortened reaction time, while reducing the amount of the carbon-containing compound as a reducing agent used. In addition, even when the carbon-containing reducing agent exceeds 3 mol per 1 mol of the lithium-ion battery cathode material, the recovery rate of the lithium compound does not increase, while production costs increase.

In the present disclosure, the content (mol) of cathode active material in the cathode material may be measured by methods typically used for measuring cathode active material content in the technical field to which the present invention pertains. For example, the content of cathode active material in the cathode material may be calculated based on the content of metal components measured through ICP analysis and the molecular weight thereof. As a specific example, the ICP analysis may be performed by placing 0.01 g of cathode material, 3 ml of HCl, and 0.5 ml of $H_2O_2$ into a conical tube, mixing and heating until the cathode material is dissolved, transferring the dissolved solution into a 50 ml tube, diluting it, and measuring the content (mol) of metal components through ICP analysis.

As another example, the weight ratio of the lithium-ion battery cathode material to the carbon-containing reducing agent may be 1:0.06 to 1:0.19, preferably 1:0.08 to 1:0.17, more preferably 1: 0.10 to 1:0.15, still more preferably 1:0.11 to 1:0.13. Within this range, heat treatment efficiency may be high, and reaction time may be shortened.

For example, the carbon-containing reducing agent may be an organic substance containing carbon, an inorganic substance containing carbon, an anode material, or a mixture thereof, preferably graphite. In this case, the carbon-containing reducing agent may easily react with lithium in the lithium-ion battery cathode material.

The graphite may have a fixed carbon content of preferably 90 % by weight or more, more preferably 95 % by weight or more, still more preferably 98 % by weight or more. Within this range, reaction with lithium in the cathode material may be easy.

In the present disclosure, the fixed carbon content (by weight) refers to the combustible residue remaining after volatile components are volatilized from carbon, and denotes the content excluding volatile components, moisture, and ash in carbon.

The graphite may preferably be graphite derived from an anode material. In this case, production costs may be reduced and resources may be recycled.

In the present disclosure, the roasting may follow definitions used in the technical field to which the present invention pertains, and as a specific example, the roasting may be defined as a process in which a gas-solid reaction is performed at a high temperature to impart beneficial chemical properties for subsequent processes.

For example, the roasting step may not include reducing agents other than the carbon-containing reducing agent. In this case, impurities are reduced, thereby providing the advantages of increased purity and recovery rate of the recovered lithium compound.

For example, the roasting may be performed under a reducing gas or inert gas atmosphere, preferably under a nitrogen ($N_2$) gas or argon gas atmosphere, more preferably under a nitrogen ($N_2$) gas atmosphere. In this case, the cathode material may be easily reduced, allowing the lithium compound to be recovered at a high yield.

For example, the lithium-ion battery cathode material may include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co). In this case, reversible capacity and thermal stability may be excellent.

As another example, the lithium-ion battery cathode material may be a compound represented by Chemical Formula 2 below.

[Chemical Formula 2] $Li_aNi_xMn_yCo_zM_wO_{2+\delta}$

In Chemical Formula 2, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$.

For example, the lithium-ion battery cathode material may be a waste lithium-ion battery cathode material. In this case, high-value lithium may be recovered along with Ni, Co, Mn, and the like, providing economic benefits through resource recycling.

For example, the flow rate of the reducing gas or inert gas may be 1 to 30 L/min, preferably 3 to 25 L/min, more preferably 5 to 20 L/min, still more preferably 7 to 12 L/min. Within this range, reaction efficiency may be excellent.

For example, the roasting may be performed at 550 to 750 °C, preferably 570 to 730 °C, more preferably 600 to 720 °C, still more preferably 620 to 700 °C. Within this range, lithium in the cathode material may be converted to lithium carbonate at a high level, and processing costs may be reduced.

After the roasting, furnace cooling may be performed.

In the present disclosure, furnace cooling refers to an operation in which the heat-treated material is cooled within the furnace, i.e., slowly cooled from the high temperature inside the furnace.

For example, the temperature increase rate up to the roasting temperature may be 1 to 20 °C/min, preferably 3 to 10 °C/min, and more preferably 3 to 7 °C/min. Within this range, roasting may be performed without placing undue stress on roasting equipment, and thermal shock is not applied to the cathode material.

For example, the roasting may be performed for 0.5 to 7 hours, preferably 2 to 6.5 hours, more preferably 3 to 6 hours, and still more preferably 4 to 6 hours. Within this range, the binder in the cathode material may be removed, and lithium may be converted by carbon into lithium carbonate at a high level.

In the present disclosure, the roasting time refers to the duration at the specified roasting temperature, excluding the time required to reach the roasting temperature.

For example, the roasting may be performed under atmospheric pressure. In this case, there are advantages in reducing process costs and improving process safety.

In the present disclosure, atmospheric pressure may be normal pressure, referring to the pressure of air (atmosphere), which is 1 atm.

For example, the roasting may be performed using various types of furnaces, preferably a box-type furnace, more preferably a sealed furnace. In this case, continuous processing is possible, productivity may be excellent, and the reduction reaction may be promoted, resulting in a high conversion rate to the lithium compound.

For example, the reaction mechanisms occurring in the roasting step are as shown in Reaction Schemes 3 to 5 below.

[Reaction Scheme 3] $4LiMeO_2 + C \text{-->} 2Li_2O + 4MeO + CO_2$

[Reaction Scheme 4] $Li_2O + CO_2 \text{-->} Li_2CO_3$

[Reaction Scheme 5] $2MeO + C \text{-->} 2Me + CO_2$

In Reaction Schemes 3 to 5, Me indicates one or more of Ni, Co, and Mn.

The reaction mechanism occurring in the roasting step is specifically as follows: phase decomposition occurs as shown in Reaction Scheme 3 at 0.3 mol or more of carbon-containing reducing agent per 1 mol of cathode active material in the cathode material, and simultaneously, a phase transformation into $Li_2CO_3$ occurs by reacting as shown in Reaction Scheme 4. At this time, the reaction of Reaction Scheme 5 occurs due to the carbon-containing reducing agent added in an amount of 0.3 mol or more, and the excess $Li_2O$ generated in Reaction Scheme 3 undergoes a phase transformation into $Li_2CO_3$ by $CO_2$ generated during this reaction.

The pulverizing refers to crushing, pulverizing, or both.

For example, the pulverizing step may use a milling machine, preferably a roll press, ball mill, or pin mill, more preferably a roll mill and pin mill sequentially. In this case, the specific surface area of the reduced roasted product of the lithium-ion battery cathode material may be increased, facilitating lithium extraction and thus enhancing the lithium recovery rate.

For example, the average particle diameter ($D_{50}$) of the reduced roasted product of the lithium-ion battery cathode material obtained after the pulverizing step may be 0.5 to 50 μm, preferably 1 to 40 μm, more preferably 3 to 30 μm, still more preferably 5 to 20 μm. Within this range, lithium extraction from the reduced roasted product of the lithium-ion battery cathode material may be facilitated, thereby increasing the lithium recovery rate.

In the present disclosure, the average particle diameter ($D_{50}$) of a reduced roasted product may be measured by a measuring method commonly used in the art to which the present invention pertains. For example, the average particle diameter ($D_{50}$) may be measured by the laser diffraction method. Specifically, reduced roasted product particles may be

dispersed in a dispersion medium, the dispersed particles may be placed in a commercially available laser diffraction particle size measuring device such as Microtrac S3500, and the particles may be irradiated with an ultrasonic wave of about 28 kHz with an output of 60 W. Then, the average particle diameter ($D_{50}$) may be calculated based on 50 % of the particle size distribution in the measuring device.

For example, the pulverizing may be performed under dry conditions. In this case, the reduced roasted product of the lithium-ion battery cathode material may be uniformly pulverized, facilitating lithium extraction.

In the present disclosure, dry conditions may refer to a method that does not use solvents or additive liquids, which is a concept opposite to wet conditions where solvents or additive liquids are used.

(b) Separating the lithium-extracted organic solvent and the extraction residues

The method of recovering a lithium compound from a lithium-ion battery cathode material according to the present invention may include step (b) of separating the lithium-extracted organic solvent and the extraction residues. In this case, separated lithium-extracted impurities such as Ni, Co, and Mn in the organic solvent may be reduced, the lithium recovery rate may be increased, and extraction residues may contain large amounts of Ni, Co, and Mn. Thus, the preparation of a precursor material may be facilitated, and thus economic benefits may be obtained.

For example, in step (b), the separation may be performed using vacuum filtration. In this case, the lithium-extracted organic solvent and extraction residues may be easily separated through a simple process, thus reducing process costs.

The vacuum filtration may preferably be vacuum filtration under reduced pressure, specifically vacuum filtration using a filtration flask. In this case, the lithium-extracted organic solvent and extraction residues may be easily separated.

In the present invention, the vacuum filtration is not particularly limited as long as it is vacuum filtration typically used in the technical field to which the present invention pertains, and the vacuum filtration may include, for example, filtration under partial vacuum or reduced-pressure conditions.

The lithium-extracted organic solvent includes a cation exchange extractant.

(c) Stripping the separated lithium-extracted organic solvent using an acidic solution to obtain a lithium-containing aqueous solution and an organic solvent

The method of recovering a lithium compound from a lithium-ion battery cathode material according to the present invention may include step (c) of stripping the separated lithium-extracted organic solvent using an acidic solution to obtain a lithium-containing aqueous solution and an organic solvent. In this case, lithium extracted into the organic solvent by binding with the cation exchange extractant may be back-extracted into the acidic solution, thereby facilitating easy recovery of lithium.

For example, in step (c), the organic/aqueous volume ratio of the lithium-extracted organic solvent to the acidic solution may be 0.5 to 10, preferably 1 to 8, more preferably 1 to 7, still more preferably 1 to 6, still more preferably 1.5 to 6, still more preferably 2.5 to 6, still more preferably 3.5 to 6.0, as a most preferred example, 4 to 5.5. Within this range, lithium may be easily back-extracted into the acidic solution, allowing easy recovery of lithium in subsequent processes and reducing the energy, cost, and time required for lithium concentration, thereby improving economic feasibility and efficiency.

For example, in step (c), the acidic solution may be a sulfuric acid aqueous solution, a hydrochloric acid aqueous solution, or a nitric acid aqueous solution, preferably a sulfuric acid aqueous solution. In this case, lithium in the organic solvent may be easily stripped into the acidic solution, thereby increasing the lithium recovery rate and enabling lithium to be readily concentrated and recovered.

For example, the acidic solution may include an acid at a molar concentration (mol/L) of 0.5 to 1.5, preferably 0.7 to 1.3, more preferably 0.9 to 1.1. Within this range, lithium in the organic solvent may be easily stripped into the acidic solution, thereby increasing the lithium recovery rate and enabling lithium to be readily concentrated and recovered.

For example, the acidic solution may have a pH of 1 or less, preferably 0 to 1, more preferably 0 to 0.5. Within this range, lithium in the organic solvent may be easily stripped into the acidic solution, thereby increasing the lithium recovery rate and enabling lithium to be readily concentrated and recovered.

For example, in step (c), the stripping may be performed by adding an acidic solution to the separated lithium-extracted organic solvent, followed by stirring at room temperature using a stirrer.

For example, the stirring may be performed at 300 to 800 rpm, preferably 400 to 700 rpm, more preferably 500 to 700 rpm. Within this range, the back-extraction of lithium from the lithium-extracted organic solvent into the acidic solution may be promoted.

For example, the stirring may be performed for 20 minutes or more, preferably 20 to 60 minutes, more preferably 20 to 40 minutes. Within this range, there is an advantage in that lithium may be sufficiently back-extracted from the organic solvent into the acidic solution.

(d) Separating the lithium-containing aqueous solution and the organic solvent

The method of recovering a lithium compound from a lithium-ion battery cathode material according to the present invention may include step (d) of separating the lithium-containing aqueous solution and the organic solvent. In this case, the subsequent carbonation process of lithium may be smoothly performed.
For example, in step (d), the organic solvent obtained after separation may be reused in the extraction of step (a), thereby reducing wastewater generation, lowering production costs, and achieving environmental friendliness.

(e) Carbonating lithium in the separated lithium-containing aqueous solution to obtain lithium carbonate

The method of recovering a lithium compound from a lithium-ion battery cathode material according to the present invention may include step (e) of carbonating lithium in the separated lithium-containing aqueous solution to obtain lithium carbonate. In this case, the energy, cost, and time required for concentrating lithium for recovery may be significantly reduced.
For example, in step (e), the carbonation may be performed by adding carbonate or carbon dioxide gas. In this case, lithium may be recovered as lithium carbonate at a high yield, and the energy, cost, and time required for concentrating lithium for recovery may be reduced.
For example, the carbonate may include one or more selected from the group consisting of sodium carbonate, ammonium carbonate, and potassium carbonate. In this case, lithium may be recovered as lithium carbonate at a high yield, and the energy, cost, and time required for concentrating lithium for recovery may be reduced.
For example, the carbon dioxide gas may be carbon dioxide. In this case, lithium may be recovered as lithium carbonate at a high yield, and the energy, cost, and time required for concentrating lithium for recovery may be reduced.
For example, based on 1 mol of lithium in the lithium-containing aqueous solution, the carbonate may be added in an amount of 0.5 to 2.5 mol, preferably 0.7 to 2 mol, more preferably 1 to 1.7 mol, still more preferably 1 to 1.5 mol. Within this range, the energy, cost, and time required for concentrating lithium for recovery may be reduced.
Preferably, before the carbonation of step (e), the method may further include a step of removing impurities from the separated lithium-containing aqueous solution. In this case, impurities such as Ni, Co, and Mn contained in the lithium-containing aqueous solution may be removed, thereby improving the purity of the lithium carbonate.
For example, the impurity removal step may be performed by adding a basic compound to adjust the pH to 10 to 12. In this case, impurities including Ni, Co, and Mn in the separated lithium-containing aqueous solution may be removed, thereby improving the purity of lithium carbonate.
In the present disclosure, the pH may be measured by methods typically used in the technical field to which the present invention pertains. Unless otherwise specified, the measurement may be performed at room temperature using a general pH measurement device. Specifically, a METTLER TOLEDO SevenDirect SD30 may be used for the measurement.
For example, the basic compound may be a metal hydroxide, a metal carbonate, or a mixture thereof. In this case, impurities including Ni, Co, and Mn in the separated lithium-containing aqueous solution may be removed, thereby improving the purity of lithium carbonate.
The metal hydroxide may preferably be sodium hydroxide, potassium hydroxide, or a mixture thereof. In this case, impurities including Ni, Co, and Mn in the separated lithium-containing aqueous solution may be removed, thereby improving the purity of lithium carbonate.
The metal carbonate may preferably be sodium carbonate, potassium carbonate, or a mixture thereof. In this case, impurities including Ni, Co, and Mn in the separated lithium-containing aqueous solution may be removed, thereby improving the purity of lithium carbonate.
For example, in step (e), the lithium carbonate obtained after carbonation may be washed with water and then dried to obtain the final lithium carbonate.
In addition, the method of recovering a lithium compound from a lithium-ion battery cathode material according to the present invention may include a step of leaching the extraction residues separated in step (b), for example, with an acid to obtain a leachate containing dissolved residual metal compounds. In this case, Ni, Co, Mn, and the like may be recovered and easily manufactured into precursor material, thereby recycling resources and providing excellent economic advantages.
For example, the acid may be sulfuric acid, nitric acid, or hydrochloric acid, preferably sulfuric acid. In this case, residual metal compounds may be recovered at high purity.
FIG. 2 below is a flowchart illustrating a method of recovering lithium carbonate from lithium-ion battery cathode material according to one embodiment of the present invention.
Referring to FIG. 2, first, the lithium-ion battery cathode material and the carbon-containing reducing agent are mixed and then roasted to obtain the reduced roasted product of the lithium-ion battery cathode material (step S10).
The lithium-ion battery cathode material may preferably be a waste lithium-ion battery cathode material,

defective products generated during a cathode coating process, or cathode scrap discarded after electrode plate cutting, and preferably may be a waste lithium-ion battery cathode material, specifically, cathode material powder obtained by pulverizing a cathode.

The lithium-ion battery cathode material may preferably include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co). In this case, reversible capacity and thermal stability may be excellent.

The carbon-containing reducing agent may be preferably an organic substance containing carbon, an inorganic substance containing carbon, an anode material, or a mixture thereof, specifically, an anode material. In this case, lithium may be easily extracted in the extraction step..

For example, based on 1 mol of the cathode active material in the lithium-ion battery cathode material, the carbon-containing reducing agent may be used in an amount of 0 to 3 mol or an amount of greater than 0 mol and 3 mol or less, as a specific example, 1 mol. Within this range, the roasting efficiency may be increased, and the roasting time may be shortened. In addition, even when the carbon-containing reducing agent is added in an amount of greater than 3 mol based on 1 mol of the cathode active material in the lithium-ion battery cathode material, the lithium recovery rate no longer increases, while production costs increase.

As another example, the weight ratio of the lithium-ion battery cathode material to the carbon-containing reducing agent may be 1:0.06 to 1:0.19, as a specific example, 1:0.11 to 0.13. Within this range, heat treatment efficiency may be high, and reaction time may be shortened.

The lithium-ion battery cathode material and carbon may preferably be dry mixed. In this case, the reduction effect of the carbon-containing reducing agent may be maximized.

Generally, a cathode material for lithium-ion batteries undergoes complex processes, such as calcination, addition of carbon and other metal oxides, and thermal fusion after binder addition, to maintain or enhance battery characteristics during preparation of the cathode material. For this reason, a cathode material of waste lithium-ion batteries contains valuable metals and impurities in various oxide forms, which may act as obstacles in the recovery of lithium and valuable metals. Here, to remove such obstacles, the cathode material is mixed with the carbon-containing reducing agent and roasted at a high temperature, thereby removing the binder added during the preparation of the cathode material and reducing metallic substances bonded with oxygen. This process is the roasting step.

For example, the roasting may be performed under a reducing gas or inert gas atmosphere, specifically under a nitrogen gas atmosphere. In this case, the cathode material may be easily reduced. Here, the flow rate of the reducing gas or inert gas may be 1 to 20 L/min, specifically 10 L/min. Within this range, the binder added during the preparation of the cathode material may be removed, and metallic substances bonded with oxygen may be easily reduced.

For example, the roasting may be performed at 550 to 750 °C, as a specific example, 650 °C. Within this range, the cathode material may be sufficiently reduced.

For example, the temperature increase rate to reach the roasting temperature may be 1 to 20 °C/min, specifically 3 °C/min. Within this range, roasting may be performed without imposing excessive stress on the roasting equipment, thus avoiding thermal shock to the cathode material.

For example, the roasting may be performed for 0.5 to 7 hours, as a specific example, 5 hours. Within this range, the cathode material may be sufficiently reduced.

For example, the roasting may be performed under atmospheric pressure. In this case, there are advantages of process safety and reduced production costs.

The roasting may be performed preferably using a sealed furnace. In this case, continuous processing is possible, productivity is excellent, and the reduction reaction may be promoted, providing the advantage of recovering high-purity lithium at a high yield.

After roasting, cooling may be performed by slow cooling or rapid cooling in air.

Next, the reduced roasted product of the lithium-ion battery cathode material is pulverized to obtain the reduced roasted product of the lithium-ion battery cathode material in powder form (step S20).

By pulverizing the reduced roasted product of the lithium-ion battery cathode material, the specific surface area is increased, facilitating lithium extraction and thereby increasing the lithium recovery rate.

For example, the pulverized, reduced roasted product of the lithium-ion battery cathode material may have an average particle diameter of 0.5 to 50 μm, specifically 10 to 15 μm. Within this range, the recovery rate of lithium may be maximized.

For example, the pulverizing may be performed using a milling machine, specifically by sequentially employing a roll mill and a pin mill. In this case, the pulverized material may be uniformly crushed or pulverized.

The pulverizing may be dry pulverizing. In this case, the pulverized material may be uniformly crushed or pulverized, thereby increasing the specific surface area of the pulverized material.

Next, the pulverized, reduced roasted product of the lithium-ion battery cathode material is extracted with the organic solvent containing a cation exchange extractant to obtain a lithium-extracted organic solvent and extraction residues (step S30).

For example, the cation exchange extractant may include an alkyl phosphate-based extractant, an alkyl monocarboxylic acid, or a mixture thereof.

For example, the alkyl phosphate-based extractant may include one or more selected from the group consisting of di-(2-ethylhexyl) phosphate, 2-ethylhexyl hydrogen-2-ethylhexylphosphonate, and bis(2,4,4-trimethylpentyl)phosphinic acid, as a specific example, di-(2-ethylhexyl) phosphate (D2EHPA). In this case, by directly extracting lithium from the reduced roasted product of the lithium-ion battery cathode material, the lithium recovery rate may be significantly improved.

For example, the alkyl monocarboxylic acid may include a compound represented by Chemical Formula 1 below, as a specific example, neodecanoic acid. In this case, by directly extracting lithium from the reduced roasted product of the lithium-ion battery cathode material, the lithium recovery rate may be significantly improved.

[Chemical Formula 1]

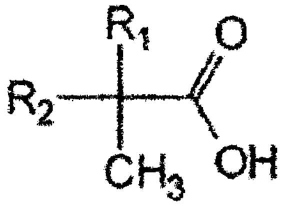

(In Chemical Formula 1, $R_1$ and $R_2$ are each independently alkyl group, and the total number of carbon atoms in $R_1$ and $R_2$ is 5 to 9, preferably 6 to 8, more preferably 7.)

For example, the organic solvent may include one or more selected from the group consisting of kerosene, hexane, benzene, and toluene, as a specific example, kerosene. In this case, the viscosity of the cation exchange extractant may be reduced, thereby facilitating interaction with the reduced roasted product of the lithium-ion battery cathode material, and reducing the amount of cation exchange extractant used, thus providing economic advantages.

For example, based on 1 mol of lithium in the reduced roasted product of the lithium-ion battery cathode material, the cation exchange extractant may be included in an amount of 0.9 to 2.5 mol, as a specific example, 1 to 2 mol. Within this range, lithium may be easily and directly extracted from the reduced roasted product of the lithium-ion battery cathode material using the organic solvent containing a cation exchange extractant.

For example, the solid-to-liquid ratio of the reduced roasted product of the lithium-ion battery cathode material to the organic solvent containing a cation exchange extractant may be 1 g/8 ml to 1 g/44 ml, as a specific example, 1 g/10 ml to 1 g/40 ml. Within this range, lithium may be directly and sufficiently extracted from the reduced roasted product of the lithium-ion battery cathode material using the organic solvent containing a cation exchange extractant.

For example, the extraction in step S30 may be performed by adding the organic solvent containing a cation exchange extractant to the reduced roasted product of the lithium-ion battery cathode material, followed by stirring at room temperature using a stirrer. In this case, lithium in the reduced roasted product of the lithium-ion battery cathode material may be easily extracted, and the extraction time may be reduced.

For example, the stirring may be performed at 100 to 500 rpm, specifically at 300 rpm. Within this range, extraction of the lithium compound from the pulverized material may be promoted.

For example, the stirring may be performed for 30 minutes or more, specifically for 60 minutes. Within this range, the lithium compound may be sufficiently extracted from the reduced roasted product of the lithium-ion battery cathode material, enabling lithium to be obtained at a high recovery rate.

The lithium-extracted organic solvent obtained after the extraction step (step S30) has a low content of impurities such as Ni, Co, and Mn, allowing easy recovery of high-purity lithium. Additionally, the extraction residues contain Ni, Co, Mn, and the like, which may be used as precursor materials, providing economic advantages.

Next, the lithium-extracted organic solvent and the extraction residues are separated (step S40).

The separation of the lithium-extracted organic solvent and the extraction residues may preferably be performed using vacuum filtration. In this case, the lithium-extracted organic solvent and the extraction residues may be easily separated through a simple process, thus reducing process costs.

Through the separation, the organic solvent in which the lithium compound is dissolved and the extraction residues are obtained.

Next, the separated lithium-extracted organic solvent is stripped with an acidic solution to obtain a lithium-containing aqueous solution and an organic solvent (step S50).

In step S50, stripping involves stripping lithium extracted by binding to the cation exchange extractant in the organic solvent and back-extracting the lithium into an acidic solution, thereby facilitating easy recovery of lithium in subsequent processes. In addition, the energy, cost, and time required for recovery may be reduced.

For example, the organic/aqueous volume ratio of the separated lithium-extracted organic solvent to the acidic solution may be 0.5 to 10, specifically 1 to 5. Within this range, lithium may be easily stripped, increasing the lithium recovery rate and enabling easy concentration of lithium, thus reducing the energy, cost, and time required and thereby improving economic feasibility and efficiency.

For example, the acidic solution may be a sulfuric acid aqueous solution, a hydrochloric acid aqueous solution, or a nitric acid aqueous solution, as a specific example, a sulfuric acid aqueous solution. In this case, lithium in the organic solvent may be easily stripped into the acidic solution, increasing the lithium recovery rate. In addition, lithium may be readily concentrated, thus reducing the energy, cost, and time required, and thereby improving economic feasibility and efficiency.

For example, the acidic solution may contain an acid at a concentration of 0.5 to 1.5 mol/L, specifically 1 mol/L. Within this range, lithium in the organic solvent may be easily stripped into the acidic solution, thereby increasing the lithium recovery rate and providing the advantage of readily concentrating and recovering lithium.

For example, the acidic solution may have a pH of 1 or lower, specifically a pH of 0. Within this range, lithium in the organic solvent may be easily stripped into the acidic solution, thereby increasing the lithium recovery rate and providing the advantage of easily recovering lithium.

The stripping of step S50 may be performed by adding an acidic solution to the separated lithium-extracted organic solvent, followed by stirring at room temperature using a stirrer.

For example, the stirring may be performed at 300 to 800 rpm, specifically at 600 rpm. Within this range, there is an advantage of promoting the back-extraction of lithium from the organic solvent into the acidic solution.

For example, the stirring may be performed for 20 minutes or more, specifically for 30 minutes. Within this range, there is an advantage that lithium may be sufficiently back-extracted from the organic solvent into the acidic solution.

Next, the lithium-containing aqueous solution and the organic solvent are separated (step S60).

In step S60, the lithium-containing aqueous solution and the organic solvent are separated to obtain a lithium-containing aqueous solution and an organic solvent, and a lithium compound is recovered from the lithium-containing aqueous solution.

In addition, the separated organic solvent may be transferred to the extraction step (step S30) for reuse. In this case, wastewater generation may be reduced, thus lowering production costs and providing environmentally friendly advantages.

Next, lithium in the separated lithium-containing aqueous solution is carbonated to obtain lithium carbonate (step S70).

The carbonation may be performed by adding carbonate or carbon dioxide gas, specifically by adding sodium carbonate. In this case, there is an advantage of quickly converting lithium into lithium carbonate.

For example, the carbonate may be added in an amount of 0.5 to 2.5 mol, specifically 1.2 mol, based on 1 mol of lithium in the lithium-containing aqueous solution. Within this range, there is an advantage of quickly converting lithium into lithium carbonate.

The separated lithium-containing aqueous solution may undergo impurity removal by adding a basic compound to adjust the pH to 10 to 12 before carbonation, specifically by adding sodium hydroxide to adjust the pH to 10 to 12. In this case, the purity and recovery rate of lithium carbonate may be improved.

After carbonation in step S70, the obtained lithium carbonate may be washed with water and then dried to obtain the final lithium carbonate.

In addition, the extraction residues obtained after the separation of step S40 are leached with an acid (step S80).

After the acid leaching, a leachate containing dissolved residual metal compounds is obtained, wherein the acid specifically may be sulfuric acid.

The leachate containing dissolved residual metal compounds (step S90) includes residual metal compounds, specifically containing Ni, Co, and Mn, and may be used as a precursor material, providing economic advantages.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Example I: Extraction rate of Li, Ni, Co, Mn, and Al according to the solid-to-liquid ratio in the extraction step]

Example 1

A powder-form cathode material (300 g) obtained from waste lithium-ion batteries and an anode material (37.04 g, corresponding to 1 mol per 1 mol of cathode active material in the cathode material) were dry-mixed, placed into a sealed furnace, heated to 650 °C under a nitrogen atmosphere, maintained for 5 hours (roasting), and then furnace-cooled for at least 10 hours to obtain the reduced roasted product of a lithium-ion battery cathode material. Here, the temperature increase rate to reach the roasting temperature was 3 °C/min, and nitrogen gas was supplied at 10 L/min.

The components of the powder-form cathode material obtained from the waste lithium-ion battery were analyzed by ICP analysis, and the results are shown in Table 1 below. For ICP analysis, 0.01 g of the cathode material, 3 ml of HCl, and 0.5 ml of $H_2O_2$ were added to a conical tube, mixed, and then heated until completely dissolved. After dissolution of the cathode material, the solution was transferred into a 50 ml tube, diluted, and measured by ICP analysis.

[Table 1]

| Ingredients | Li | Ni | Co | Mn | Zr | B | Al | Ti | Fe | Cu | Na | Si | Zn | Si | Ca | Mg |
|---|---|---|---|---|---|---|---|---|---|---|---|---|---|---|---|---|
| Contents(wt%) | 7.1 | 62.8 | 42 | 22 | 0.07 | 0.07 | 0.27 | 0.06 | 0.0036 | 0.002 | 0.015 | 0.016 | 0.002 | 0.1 | 0.05 | 0.01 |

The reduced roasted product of the lithium-ion battery cathode material was sequentially pulverized using a roll mill and a pin mill to obtain the reduced roasted product of the lithium-ion battery cathode material in powder form with an average particle diameter ($D_{50}$) of 11.5 pm.

The average particle diameter ($D_{50}$) was measured by the laser diffraction method. Specifically, reduced roasted product particles were dispersed in a dispersion medium, the dispersed particles were placed in a laser diffraction particle size measuring device such as Microtrac S3500, and the particles were irradiated with an ultrasonic wave of about 28 kHz with an output of 60 W. Then, the average particle diameter ($D_{50}$) was calculated based on 50 % of the particle size distribution in the measuring device.

The components of the reduced roasted product of the lithium-ion battery cathode material were analyzed by ICP analysis, and the results are shown in Table 2 below.

[Table 2]

| Classification | Li | Ni | Co | Mn | Al |
|---|---|---|---|---|---|
| Content in reduced roasted product of lithium-ion battery cathode material (wt%) | 6.5 | 48.0 | 3.7 | 2.2 | 0.41 |

Kerosene (hereinafter referred to as "D2EHPA-containing kerosene") containing di-(2-ethylhexyl) phosphate (D2EHPA) at a concentration of 1 mol/L as the cation exchange extractant was prepared. 1 g of the reduced roasted product in powder form was added to 20 ml of the D2EHPA-containing kerosene and extracted at room temperature for 1 hour, yielding a lithium-extracted organic solvent and extraction residues. Stirring was conducted at 300 rpm during extraction. The solid-to-liquid ratio was 1 g/20 ml, and the amount of D2EHPA corresponded to 2 mol per 1 mol of lithium in the reduced roasted product of the lithium-ion battery cathode material.

The lithium-extracted D2EHPA-containing kerosene and extraction residues were separated using vacuum filtration.

The separated lithium-extracted D2EHPA-containing kerosene was stripped with a sulfuric acid aqueous solution at a molar concentration of 1 mol/L, resulting in lithium being back-extracted into the sulfuric acid aqueous solution, thereby obtaining a lithium-containing aqueous solution and D2EHPA-containing kerosene. The volume ratio (organic/aqueous volume ratio, O/A ratio) of lithium-extracted D2EHPA-containing kerosene to sulfuric acid aqueous solution was 1. Stripping was conducted under room temperature for 30 minutes with stirring at 600 rpm.

The lithium-containing aqueous solution and D2EHPA-containing kerosene were separated using a separation funnel.

Since impurities containing Ni, Co, and Mn were present in the separated lithium-containing aqueous solution, impurity removal was performed by adding sodium hydroxide at a molar concentration of 4 mol/L to increase the pH to 12, yielding a precipitate containing Ni, Co, and Mn, and a lithium-containing aqueous solution, and then separating them. The impurity removal was conducted at room temperature with stirring. Vacuum filtration was used to separate the precipitate containing Ni, Co, and Mn from the lithium-containing aqueous solution.

After impurity removal, carbonation was performed by adding sodium carbonate to the purified lithium-containing aqueous solution to recover lithium as lithium carbonate. Sodium carbonate was added in an amount of 1.2 mol per 1 mol of lithium in the lithium-containing aqueous solution, while stirring at 80 °C.

After carbonation was completed, lithium carbonate was separated as a wet cake state from the aqueous solution.

The synthesized lithium carbonate in the wet cake state was washed with water at 80 °C to remove the high sodium content. During washing, the solid-to-liquid ratio (ratio of mineral to liquid) of the lithium carbonate powder to water was 1 g/3 ml, and stirring was performed during the washing step.

The washed lithium carbonate was dried at 130 °C using a hot-air dryer to obtain the final lithium carbonate.

<u>Example 2</u>

The process was performed in the same manner as in Example 1, except that the solid-to-liquid ratio of the powder-form reduced roasted product to D2EHPA-containing kerosene was changed to 1 g/10 ml.

<u>Example 3</u>

The process was performed in the same manner as in Example 1, except that the solid-to-liquid ratio of the powder-form reduced roasted product to D2EHPA-containing kerosene was changed to 1 g/30 ml.

Example 4

The process was performed in the same manner as in Example 1, except that the solid-to-liquid ratio of the powder-form reduced roasted product to D2EHPA-containing kerosene was changed to 1 g/40 ml.

[Test Example I: Extraction amount and extraction rate of Li, Ni, Co, Mn, and Al]

The contents of Li, Ni, Co, Mn, and Al in the lithium-containing aqueous solution separated after stripping obtained in Examples 1 to 4 were measured by ICP analysis, and the results are shown in Table 3 and FIG. 3 below.

* ICP Analysis: A 0.2 g aliquot of the lithium-containing aqueous solution was placed into a conical tube, and the precise weight thereof was measured. Then, 0.1 ml of nitric acid at a concentration of 70 % by weight were added, and 500 μl of a 1000 mg/kg internal standard (Sc) were added, followed by dilution with ultrapure water to a total volume of 50 ml. The contents of Li, Ni, Co, Mn, and Al were then measured via ICP analysis.
* Extraction rate (wt%): The contents of Li, Ni, Co, Mn, and Al in the reduced roasted product of the lithium-ion battery cathode material were measured by ICP analysis, and the extraction rate was calculated using Equation 1 below.

Extraction rate (wt%) of component M = [content of component M in the lithium-containing aqueous solution (g) / content of component M in reduced roasted product of lithium-ion battery cathode material (g)] × 100 [Equation 1]

In Equation 1, M is Li, Ni, Co, Mn, or Al.

[Table 3]

| Classification | Solid-to-liquid ratio (g/ml) | Extraction rate (wt%) | | | | |
|---|---|---|---|---|---|---|
| | | Li | Ni | Co | Mn | Al |
| Example 1 | 1g/20ml | >99 | 0.17 | 0.31 | 5.7 | - |
| Example 2 | 1g/10ml | 61.7 | 0.44 | 0.07 | 0.81 | - |
| Example 3 | 1g/30ml | >99 | 0.24 | 0.51 | 8.3 | - |
| Example 4 | 1g/40ml | >99 | 3.04 | 0.72 | 8.6 | - |

As shown in Table 3 and FIG. 3, within the solid-to-liquid ratio range of 1 g/10 ml to 1 g/40 ml, the extraction rate of Li was high while the extraction rates of Ni, Co, Mn, and Al were low. Particularly, at solid-to-liquid ratios of 1 g/20 ml or greater, the extraction rate of Li exceeded 99 % by weight. At a solid-to-liquid ratio of 1 g/10 ml, the extraction rates of Co and Mn were lower.

[Example II: Extraction rate according to the molar ratio of lithium to D2EHPA in the reduced roasted product of the lithium-ion battery cathode material during the extraction step]

Example 5

The process was performed in the same manner as in Example 1, except that D2EHPA was added in an amount corresponding to 1.41 mol per 1 mol of lithium in the reduced roasted product of the lithium-ion battery cathode material.

Example 6

The process was performed in the same manner as in Example 1, except that D2EHPA was added in an amount corresponding to 1 mol per 1 mol of lithium in the reduced roasted product of the lithium-ion battery cathode material.

[Test Example II: Contents and extraction rates of Li, Ni, Co, Mn, and Al]

The contents of Li, Ni, Co, Mn, and Al were measured by ICP analysis in the same manner as in Test Example I. The results are shown in Table 4 below, and the extraction rates calculated from the measured contents are shown in Table 5 and FIG. 4 below.

[Table 4]

| Classification | Molar ratio of Li:D2EHPA | Extraction amount (mg/L) | | | | |
|---|---|---|---|---|---|---|
| | | Li | Ni | Co | Mn | Al |
| Example 1 | 1:2 | 3475 | 41.1 | 5.7 | 63.8 | - |
| Example 5 | 1:1.41 | 2826 | 18.3 | 3.2 | 40.0 | - |
| Example 6 | 1:1 | 2112 | 9.5 | 2.1 | 25.1 | - |

As shown in Table 4, it was confirmed that within the molar ratio range of 1 to 2 of D2EHPA per 1 mol of Li in the powder-form reduced roasted product, the Li extraction amount was high, while the extraction amounts of Ni, Co, Mn, and Al were low.

[Table 5]

| Classification | Molar ratio of Li:D2EHPA | Extraction rate (wt%) | | | | |
|---|---|---|---|---|---|---|
| | | Li | Ni | Co | Mn | Al |
| Example 1 | 1:2 | >99 | 0.17 | 0.31 | 5.7 | - |
| Example 5 | 1:1.41 | 87.1 | 0.08 | 0.17 | 3.6 | - |
| Example 6 | 1:1 | 65.1 | 0.04 | 0.11 | 2.3 | - |

As shown in Table 5 and FIG. 4 below, it was confirmed that within the molar ratio range of 1 to 2 of D2EHPA per 1 mol of Li in the powder-form reduced roasted product, the Li extraction rate was high, while the extraction rates of Ni, Co, Mn, and Al were low.

[Example III: Extraction amounts according to the O/A ratio in the stripping step]

<u>Example 7</u>

The process was performed in the same manner as in Example 1, except that the O/A ratio was changed to 3. At this time, the pH of the lithium-containing aqueous solution after stripping was measured.

<u>Example 8</u>

The process was performed in the same manner as in Example 1, except that the O/A ratio was changed to 5. At this time, the pH of the lithium-containing aqueous solution after stripping was measured.

[Test Example III: Extraction amounts of Li, Ni, Co, Mn, and Al, and pH of the lithium-containing aqueous solution]

The contents of Li, Ni, Co, Mn, and Al were measured by ICP analysis in the same manner as in Test Example I, and the results are shown in Table 6 and FIG. 5 below.

In addition, the pH was measured at room temperature using a METTLER TOLEDO SevenDirect SD30.

[Table 6]

| Classification | O/A ratio | Extraction amount (mg/L) | | | | | pH |
|---|---|---|---|---|---|---|---|
| | | Li | Ni | Co | Mn | Al | |
| Example 1 | 1 | 3475 | 41.1 | 5.7 | 63.8 | - | 0 |
| Example 7 | 3 | 9777 | 127.9 | 16.4 | 202.2 | - | 1 |
| Example 8 | 5 | 14781.5 | 206.4 | 23.4 | 76.1 | - | 2 |

As shown in Table 6 and FIG. 5 below, it was confirmed that within the O/A ratio range of 1 to 5, the extraction amount of Li was high, while the extraction amounts of Ni, Co, Mn, and Al were low. Specifically, Example 8 with an O/A ratio of 5 showed the highest Li extraction amount.

[Example IV: Recovery of lithium carbonate from the lithium-containing aqueous solution separated after stripping]

The contents of Li, Ni, Co, Mn, and Al in the lithium-containing aqueous solution obtained from Example 8, the lithium-containing aqueous solution after pH adjustment, and the residual solution after carbonation were measured by ICP analysis as described above, and the results are shown in Table 7.

[Table 7]

| Example 8 | Contents (mg/L) | | | | |
|---|---|---|---|---|---|
| | Li | Ni | Co | Mn | Al |
| Obtained lithium-containing aqueous solution | 14781.5 | 206.4 | 23.4 | 76.1 | - |
| Lithium-containing aqueous solution after pH adjustment | 14700 | - | - | - | - |
| Residual solution after carbonation | 2696 | - | - | - | - |

As shown in Table 7, it was confirmed that the lithium-containing aqueous solution from which impurities were removed by pH adjustment did not contain Ni, Co, and Mn, resulting in recovery as high-purity lithium carbonate.

[Example V: Impurity content of the recovered lithium carbonate]

The impurity content of the lithium carbonate recovered by carbonation in Example 8 was measured via ICP analysis, and the results are shown in Table 8 below.

[Table 8]

| Classification | **Na** | **Ca** | **NI** | **Co** | **Mn** | **Al** | **Fe** | **Cu** | **K** | **Mg** | **Cr** | **Zn** | **TI** | **Zr** | **SI** | **Pb** |
|---|---|---|---|---|---|---|---|---|---|---|---|---|---|---|---|---|
| Contents (mg/kg) | **760** | **35** | **ND** | **ND** | **ND** | **ND** | **ND** | **ND** | **ND** | **ND** | **ND** | **ND** | **ND** | **ND** | **ND** | **ND** |
| * ND: Not Detected | | | | | | | | | | | | | | | | |

As shown in Table 8, the recovered lithium carbonate contained Na and Ca components, while components such as Ni, Co, and Mn were not detected, confirming recovery as high-purity lithium carbonate.

## Claims

1. A method of recovering a lithium compound, comprising:

   (a) extracting a reduced roasted product of a lithium-ion battery cathode material using an organic solvent containing a cation exchange extractant to obtain a lithium-extracted organic solvent and extraction residues;
   (b) separating the lithium-extracted organic solvent and the extraction residues;
   (c) stripping the separated lithium-extracted organic solvent using an acidic solution to obtain a lithium-containing aqueous solution and an organic solvent;
   (d) separating the lithium-containing aqueous solution and the organic solvent; and
   (e) carbonating lithium in the separated lithium-containing aqueous solution to obtain lithium carbonate.

2. The method according to claim 1, wherein, in step (a), the reduced roasted product of the lithium-ion battery cathode material is obtained by mixing the lithium-ion battery cathode material with a carbon-containing reducing agent, roasting the mixture at 550 to 750 °C, and then pulverizing the roasted mixture.

3. The method according to claim 2, wherein the carbon-containing reducing agent is used in an amount of 0 to 3 mol per 1 mol of a cathode active material in the lithium-ion battery cathode material.

4. The method according to claim 2, wherein the carbon-containing reducing agent is an organic substance containing carbon, an inorganic substance containing carbon, an anode material, or a mixture thereof.

5. The method according to claim 2, wherein the roasting is performed under a reducing gas or an inert gas.

6. The method according to claim 2, wherein the lithium-ion battery cathode material comprises one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co).

7. The method according to claim 2, wherein the lithium-ion battery cathode material is a waste lithium-ion battery cathode material.

8. The method according to claim 2, wherein the pulverizing is performed using a milling machine.

9. The method according to claim 1, wherein, in step (a), the cation exchange extractant comprises an alkyl phosphate-based extractant, alkyl monocarboxylic acid, or a mixture thereof.

10. The method according to claim 9, wherein the alkyl phosphate-based extractant comprises one or more selected from the group consisting of di-(2-ethylhexyl) phosphate, 2-ethylhexyl hydrogen-2-ethylhexylphosphonate, and bis(2,4,4-trimethylpentyl)phosphinic acid.

11. The method according to claim 9, wherein the alkyl monocarboxylic acid comprises a compound represented by Chemical Formula 1 below.

[Chemical Formula 1]

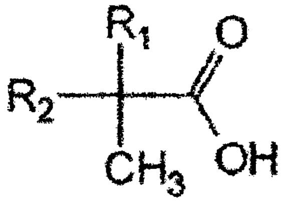

,

wherein $R_1$ and $R_2$ are each independently an alkyl group, and the total number of carbon atoms in $R_1$ and $R_2$ is from 5 to 9.

12. The method according to claim 1, wherein, in step (a), the organic solvent comprises one or more selected from the group consisting of kerosene, hexane, benzene, and toluene.

13. The method according to claim 1, wherein, in step (a), the cation exchange extractant is comprised in an amount of 0.9 to 2.5 mol per 1 mol of lithium in the reduced roasted product of the lithium-ion battery cathode material.

14. The method according to claim 1, wherein, in step (a), a solid-to-liquid ratio of the reduced roasted product of the lithium-ion battery cathode material to the organic solvent containing a cation exchange extractant is 1 g/8 ml to 1 g/44 ml.

15. The method according to claim 1, wherein, in step (b), separation of the lithium-extracted organic solvent and the extraction residues is performed using vacuum filtration.

16. The method according to claim 1, wherein, in step (c), an organic/aqueous volume ratio of the lithium-extracted organic solvent to the acidic solution is 0.5 to 10.

17. The method according to claim 1, wherein, in step (c), the acidic solution is a sulfuric acid aqueous solution, a hydrochloric acid aqueous solution, or a nitric acid aqueous solution.

18. The method according to claim 1, wherein, in step (e), the carbonation is performed by adding carbonate or carbon dioxide gas.

**19.** The method according to claim 1, wherein, in step (d), the separated organic solvent is reused in the extraction of step (a).

**20.** The method according to claim 1, further comprising leaching the extraction residues obtained in step (b) with an acid to obtain a leachate containing dissolved residual metal compounds.

[FIG. 1]

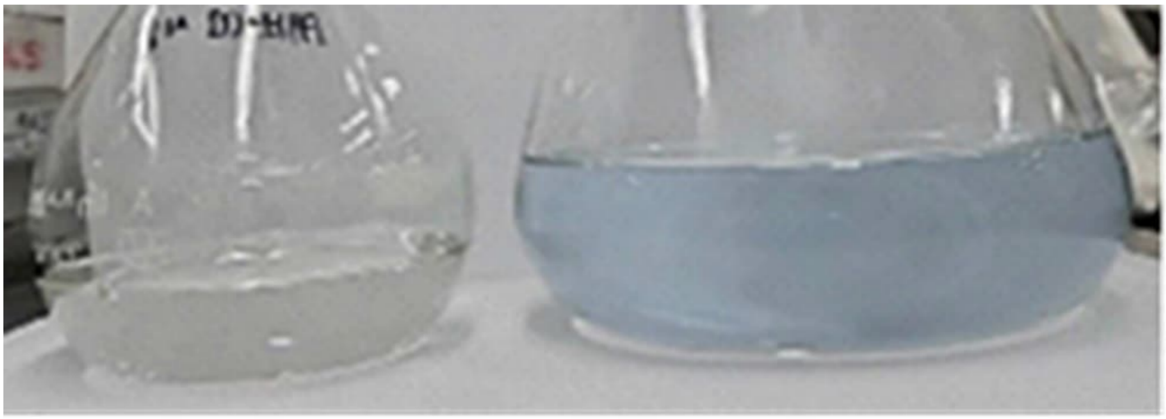

[FIG. 2]

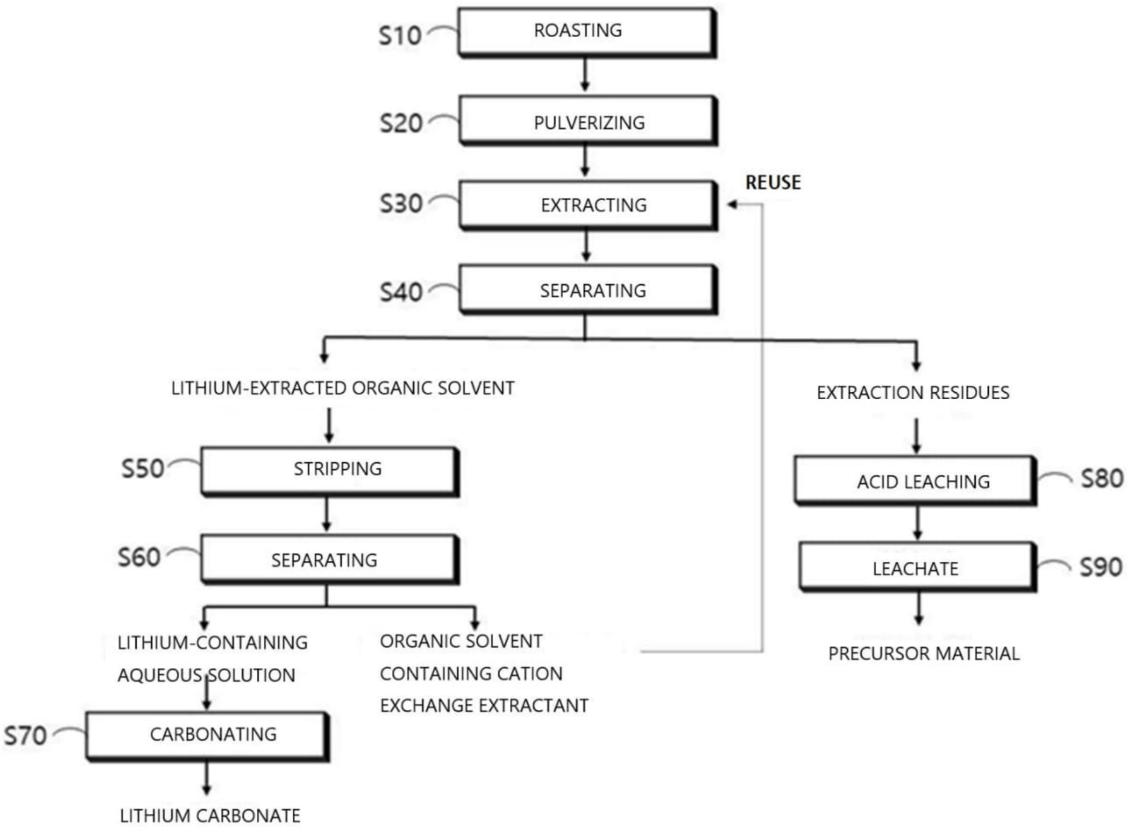
S10
ROASTING
S20
PULVERIZING
S30
EXTRACTING
REUSE
S40
SEPARATING
LITHIUM-EXTRACTED ORGANIC SOLVENT
EXTRACTION RESIDUES
S50
STRIPPING
S60
SEPARATING
ACID LEACHING
S80
LEACHATE
S90
LITHIUM-CONTAINING AQUEOUS SOLUTION
ORGANIC SOLVENT CONTAINING CATION EXCHANGE EXTRACTANT
PRECURSOR MATERIAL
S70
CARBONATING
LITHIUM CARBONATE

[FIG. 3]

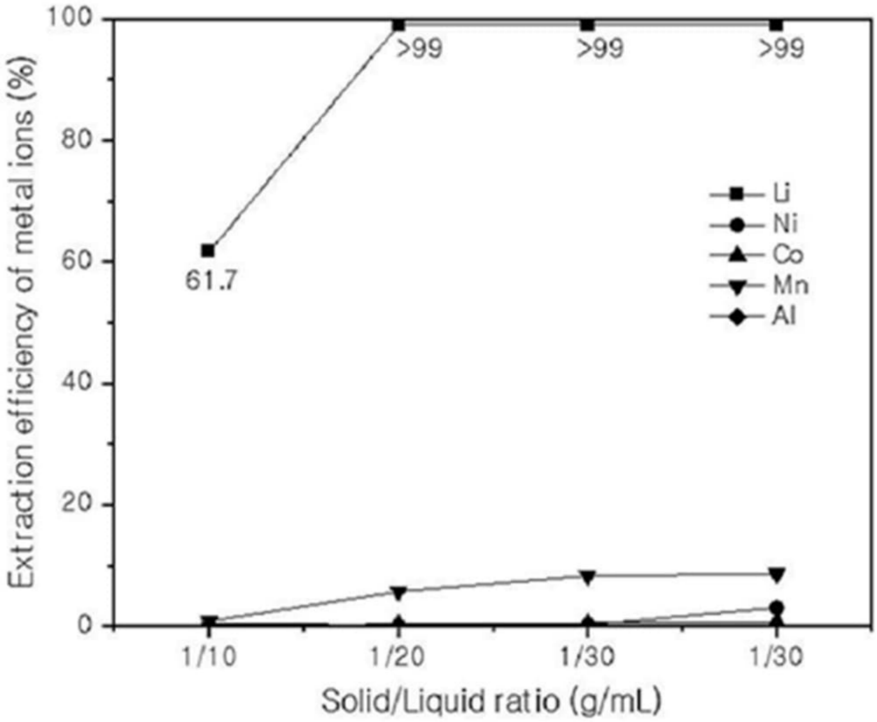
100
80
60
40
20
0
Extraction efficiency of metal ions (%)
>99
>99
>99
61.7
Li
Ni
Co
Mn
Al
1/10
1/20
1/30
1/30
Solid/Liquid ratio (g/mL)

[FIG. 4]

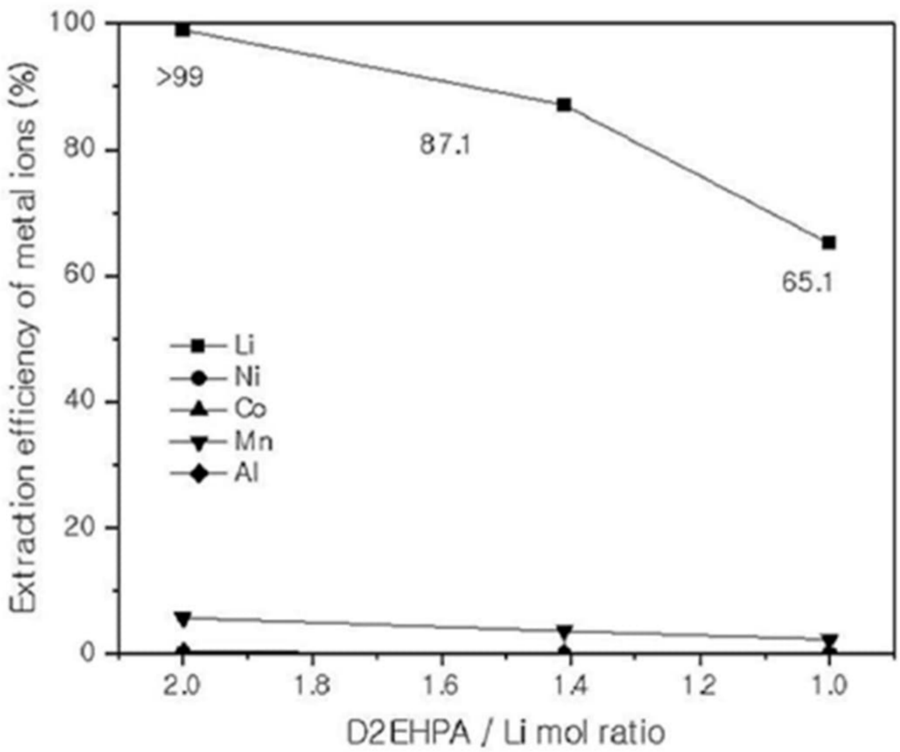
100
80
60
40
20
0
Extraction efficiency of metal ions (%)
>99
87.1
65.1
Li
Ni
Co
Mn
Al
2.0
1.8
1.6
1.4
1.2
1.0
D2EHPA / Li mol ratio

[FIG. 5]

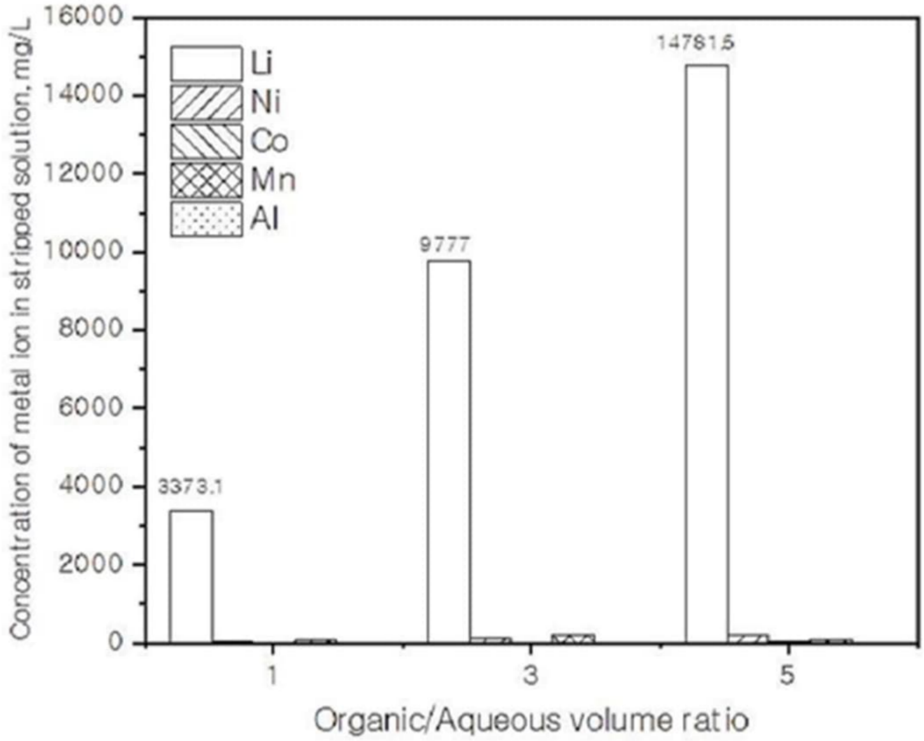
Concentration of metal ion in stripped solution, mg/L
16000
14000
12000
10000
8000
6000
4000
2000
0
Li
Ni
Co
Mn
Al
3373.1
9777
14781.5
1
3
5
Organic/Aqueous volume ratio

[FIG. 6]

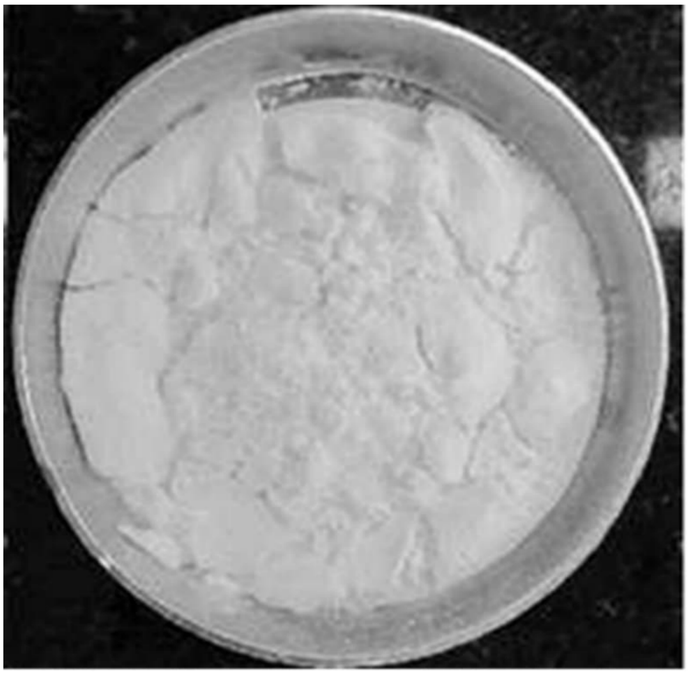

# INTERNATIONAL SEARCH REPORT

International application No.
**PCT/KR2025/009306**

## A. CLASSIFICATION OF SUBJECT MATTER

**H01M 10/54**(2006.01)i; **C22B 26/12**(2006.01)i; **C22B 3/42**(2006.01)i; **B09B 3/40**(2022.01)i; **B09B 3/35**(2022.01)i; **B09B 101/16**(2022.01)i

According to International Patent Classification (IPC) or to both national classification and IPC

## B. FIELDS SEARCHED

Minimum documentation searched (classification system followed by classification symbols)

H01M 10/54(2006.01); C01D 15/02(2006.01); C01D 15/08(2006.01); C01F 17/00(2006.01); C22B 1/02(2006.01); C22B 26/12(2006.01); C22B 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬이온전지(lithium ion battery), 양극재(cathode material), 리튬 추출(lithium extraction), 양이온 교환 추출제(cation exchange extractant), 산성 용액(acid solution), 배소(roasting), 탄산화(carbonation)

## C. DOCUMENTS CONSIDERED TO BE RELEVANT

| Category* | Citation of document, with indication, where appropriate, of the relevant passages | Relevant to claim No. |
|---|---|---|
| A | KR 10-2019-0127864 A (JX NIPPON MINING & METALS CORP.) 13 November 2019 (2019-11-13) claim 1; paragraphs [0017]-[0020], [0022], [0035]-[0037], [0040], [0043]-[0046]; figure 1 | 1-20 |
| A | KR 10-2021-0068095 A (JX NIPPON MINING & METALS CORP.) 08 June 2021 (2021-06-08) claims 1, 10; paragraphs [0025]-[0027], [0031]-[0034], [0038]-[0042], [0053], [0081]; figure 1 | 1-20 |
| A | WO 2023-195533 A1 (ASAKA RIKEN CO., LTD.) 12 October 2023 (2023-10-12) claims 1-18; figure 1 | 1-20 |
| A | KR 10-2020-0032663 A (INDUSTRY-ACADEMY COOPERATION FOUNDATION OF SEJONG UNIVERSITY) 26 March 2020 (2020-03-26) claims 1, 2, 5; figure 1 | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 September 2025** | **26 September 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/009306**

**C. DOCUMENTS CONSIDERED TO BE RELEVANT**

| Category* | Citation of document, with indication, where appropriate, of the relevant passages | Relevant to claim No. |
|---|---|---|
| A | JP 2019-173106 A (JX NIPPON MINING & METALS CORP.) 10 October 2019 (2019-10-10) claims 1-7; figure 1 | 1-20 |

Form PCT/ISA/210 (second sheet) (July 2022)

**INTERNATIONAL SEARCH REPORT**
**Information on patent family members**

International application No.
**PCT/KR2025/009306**

| Patent document cited in search report | Publication date (day/month/year) | Patent family member(s) | Publication date (day/month/year) |
|---|---|---|---|
| KR 10-2019-0127864 A | 13 November 2019 | CA 3058572 A1 | 04 October 2018 |
| | | CA 3058572 C | 06 June 2023 |
| | | CN 110475879 A | 19 November 2019 |
| | | CN 110475879 B | 22 March 2022 |
| | | EP 3604567 A1 | 05 February 2020 |
| | | EP 3604567 B1 | 23 October 2024 |
| | | EP 3604567 C0 | 23 October 2024 |
| | | JP 6801090 B2 | 16 December 2020 |
| | | KR 10-2324612 B1 | 11 November 2021 |
| | | TW 201842707 A | 01 December 2018 |
| | | TW I683466 B | 21 January 2020 |
| | | US 11961980 B2 | 16 April 2024 |
| | | US 2020-0044295 A1 | 06 February 2020 |
| KR 10-2021-0068095 A | 08 June 2021 | CN 112930618 A | 08 June 2021 |
| | | EP 3876337 A1 | 08 September 2021 |
| | | JP 2020-072032 A | 07 May 2020 |
| | | JP 7217612 B2 | 03 February 2023 |
| | | TW 202026434 A | 16 July 2020 |
| | | TW I729543 B | 01 June 2021 |
| | | US 12243993 B2 | 04 March 2025 |
| | | US 2022-0045375 A1 | 10 February 2022 |
| | | WO 2020-090690 A1 | 07 May 2020 |
| WO 2023-195533 A1 | 12 October 2023 | CA 3230515 A1 | 06 April 2023 |
| | | CN 117897508 A | 16 April 2024 |
| | | CN 118749033 A | 08 October 2024 |
| | | EP 4375387 A1 | 29 May 2024 |
| | | EP 4464805 A1 | 20 November 2024 |
| | | JP 2023-051657 A | 11 April 2023 |
| | | JP 2023-051697 A | 11 April 2023 |
| | | JP 2023-051698 A | 11 April 2023 |
| | | JP 2023-051699 A | 11 April 2023 |
| | | JP 2023-051700 A | 11 April 2023 |
| | | JP 2023-051701 A | 11 April 2023 |
| | | JP 2023-051702 A | 11 April 2023 |
| | | JP 2023-051703 A | 11 April 2023 |
| | | JP 2023-051704 A | 11 April 2023 |
| | | JP 2023-051705 A | 11 April 2023 |
| | | JP 2023-051706 A | 11 April 2023 |
| | | JP 2023-051707 A | 11 April 2023 |
| | | JP 2023-051708 A | 11 April 2023 |
| | | JP 2023-103795 A | 27 July 2023 |
| | | JP 2023-103929 A | 27 July 2023 |
| | | JP 2023-103930 A | 27 July 2023 |
| | | JP 2023-103931 A | 27 July 2023 |
| | | JP 2023-103932 A | 27 July 2023 |
| | | JP 2023-103933 A | 27 July 2023 |
| | | JP 2023-103934 A | 27 July 2023 |
| | | JP 2023-103935 A | 27 July 2023 |
| | | JP 2023-103936 A | 27 July 2023 |
| | | JP 2023-103937 A | 27 July 2023 |

Form PCT/ISA/210 (patent family annex) (July 2022)

**INTERNATIONAL SEARCH REPORT**
**Information on patent family members**

International application No.
**PCT/KR2025/009306**

| Patent document cited in search report | Publication date (day/month/year) | Patent family member(s) | Publication date (day/month/year) |
|---|---|---|---|
| | | JP 2023-103938 A | 27 July 2023 |
| | | JP 2023-103939 A | 27 July 2023 |
| | | JP 2023-103940 A | 27 July 2023 |
| | | JP 2023-103941 A | 27 July 2023 |
| | | JP 2023-104271 A | 28 July 2023 |
| | | JP 2023-104845 A | 28 July 2023 |
| | | JP 7060899 B1 | 27 April 2022 |
| | | JP 7084669 B1 | 15 June 2022 |
| | | JP 7097130 B1 | 07 July 2022 |
| | | JP 7573884 B2 | 28 October 2024 |
| | | JP 7573885 B2 | 28 October 2024 |
| | | JP 7573886 B2 | 28 October 2024 |
| | | JP 7588863 B2 | 25 November 2024 |
| | | JP 7588864 B2 | 25 November 2024 |
| | | JP 7588865 B2 | 25 November 2024 |
| | | JP 7588866 B2 | 25 November 2024 |
| | | JP 7588867 B2 | 25 November 2024 |
| | | JP 7591289 B2 | 28 November 2024 |
| | | JP 7591290 B2 | 28 November 2024 |
| | | JP 7591291 B2 | 28 November 2024 |
| | | KR 10-2024-0048004 A | 12 April 2024 |
| | | KR 10-2024-0137028 A | 19 September 2024 |
| | | US 2025-0007022 A1 | 02 January 2025 |
| | | US 2025-0167328 A1 | 22 May 2025 |
| | | WO 2023-054667 A1 | 06 April 2023 |
| | | WO 2023-229045 A1 | 30 November 2023 |
| KR 10-2020-0032663 A | 26 March 2020 | KR 10-2313447 B1 | 15 October 2021 |
| JP 2019-173106 A | 10 October 2019 | JP 6946223 B2 | 06 October 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20150094412 A